# EUROPÄISCHE PATENTSCHRIFT

(11) **EP 0 854 297 B1**
(45) Veröffentlichungstag und Bekanntmachung des Hinweises auf die Patenterteilung: **10.04.2002**
(21) Anmeldenummer: 97122752.5
(22) Anmeldetag: 23.12.1997
(51) Int. Cl.: F16B 5/00, B60R 1/06

(54) **Elastische Klemm- oder Steckverbindung und damit ausgerüsteter Fahrzeugspiegel**
Elastic clamping- or plugassembly and vehicle mirror equipped with such an assembly
Assemblage à fiches ou à serrage élastique et rétroviseur pour véhicule équipé d'un tel assemblage

(30) Priorität: 15.01.1997 DE 19701148
(43) Veröffentlichungstag der Anmeldung: 22.07.1998
(73) Patentinhaber: Donnelly Hohe GmbH & Co. KG, 97903 Collenberg (DE)
(72) Erfinder: Thau, Wolfgang, 58285 Gevelsberg (DE)
(74) Vertreter: Böck, Bernhard, Dipl.-Ing.

(56) Entgegenhaltungen:
- DE-A- 3 206 754
- DE-A- 4 438 092
- US-A- 3 922 833
- US-A- 4 407 534
- US-A- 4 930 753

## Beschreibung

Die Erfindung betrifft einen Fahrzeugspiegel nach dem Oberbegriff des Patentanspruchs 1.

Es ist eine Vielzahl von Verbindungsmöglichkeiten zweier oder mehrerer Bauteile bekannt. So können die Bauteile unlösbar beispielsweise durch Kleben, Schweißen, Nieten oder dergleichen oder aber lösbar beispielsweise durch Schrauben, Clipse oder dergleichen verbunden werden.

Insbesondere, bei der Verwendung zur Verbindung von Gehäuseteilen eines Fahrzeugspiegels, insbesondere Fahrzeugaußenspiegels, weisen diese bekannten Verbindungsmöglichkeiten eine Reihe von Nachteilen auf. So sind oftmals eine Vielzahl von Verbindungselementen notwendig, wodurch sich der Montageaufwand erhöht. Weiter werden Fertigungstoleranzen bei der Herstellung der Gehäuseteile, beispielsweise durch Spritzgießen, nur unzureichend ausgeglichen, wodurch die Teile, insbesondere bei Schwingungsbelastung, aufgrund einer unerwünschten Relativbewegung "klappern". Mechanische körperschallübertragende Schwingungen werden regelmäßig ungedämpft weitergeleitet.

Ausgehend von diesem Stand der Technik ist es die Aufgabe der vorliegenden Erfindung,
einen Fahrzeugspiegel, insbesondere Fahrzeugaußenspiegel, zu schaffen, dessen Gehäuseteile einfach und lösbar verbindbar sind, wobei gleichzeitig fertigungsbedingte Toleranzen ausgeglichen werden können und eine verbesserte Entkopplung bzw. eine hohe Dämpfung hinsichtlich der Übertragung mechanischer Schwingungen zwischen den Gehäuseteilen erzielbar ist.

Diese Aufgabe wird durch einen Fahrzeugspiegel nach der Lehre des Anspruchs 1 gelöst.

Vorteilhafte Ausgestaltungen der Erfindung sind Gegenstand der Unteransprüche.

Der erfindungsgemäße Fahrzeugspiegel, insbesondere Fahrzeugaußenspiegel, Weist ein geteiltes Gehäuse auf, das mindestens ein Unterteil und mindestens ein Oberteil aufweist, wobei Ober- und Unterteil im wesentlichen wannen-, napf- oder deckelförmig mit jeweils im wesentlichen geschlossen oder unterbrochen umlaufendem Rand ausgebildet sind. Das Ober- und das Unterteil weisen im Bereich ihrer zueinander weisenden die Trennfuge bildenden Kanten jeweils vorspringende Profilansätze auf, die so angeordnet und ausgebildet sind, daß im zusammengefügten Zustand der beiden Gehäuseteile die Profilansätze des Oberteils und des Unterteils unter Bildung einer im wesentlichen nach radial außen offenen Ausnehmung alternierend einander derart hintergreifen, daß ein zumindest in radialer Richtung elastisches Verbindungselement jeweils mindestens zwei benachbarte Profilansätze durchgreifend und diese gegeneinander verriegelnd von radial außen in die Ausnehmung einbringbar ist.

Vorzugsweise weist dabei das Verbindungselement ein zum Querschnitt der Ausnehmung im wesentlichen form- und/oder funktionskomplementäres Querschnittsprofil auf.

Nach einem besonders bevorzugten Ausführungsbeispiel sind die durch die Profilansätze der Gehäuseteile gebildete Ausnehmung und das Verbindungselement derart form- und funktionskomplementär ausgebildet, daß das Verbindungselement unter elastischer Verformung der Profilansätze und/oder des Verbindungselementes nach Art einer Clips-Verbindung lösbar in die Ausnehmung eindrückbar ist.

Gemäß einem weiteren Ausführungsbeispiel umläuft das Verbindungselement in der Ausnehmung das Gehäuse im Bereich der Trennfuge im wesentlichen vollständig nach Art einer Schlaufe geschlossen.

Im einfachsten Fall kann auch bei einem erfindungsgemäßen Fahrzeugspiegel das Verbindungselement im wesentlichen aus einem Elastomer, insbesondere aus Gummi oder einem gummiähnlichen Material bestehen und beispielsweise die Form eines O-Rings aufweisen, der über das montierte Gehäuse gezogen wird und in die im wesentlichen rinnenförmig das gesamte Gehäuse umlaufende Ausnehmung einschnappt.

In einer alternativen Ausgestaltung kann das Verbindungselement im wesentlichen die Form einer geschlossenen Schlaufe, beispielsweise aus einem schlauchförmigen Material, aufweisen, das durch Schrumpfen, beispielsweise durch thermische Beanspruchung, in der Lage ist, seine Länge zu verändern. So kann bei der Montage zunächst die Schlaufe über das vormontierte Gehäuse gezogen und anschließend durch Erhitzen unter Bildung einer festen, jedoch elastischen Anlage in die Ausnehmung eingeschrumpft werden.

In einer weiteren alternativen Ausgestaltung kann das Verbindungselement im wesentlichen in Form einer geschlossene Schlaufe Mittel zur Verkürzung der Schlaufenlänge aufweisen. Dies kann durch eine beliebige Spannvorrichtung oder aber im einfachsten Fall durch Verknoten der Schlaufe unter Erzielung einer Zugspannung der Schlaufe in der Ausnehmung geschehen.

In grundsätzlich beliebiger Weise kann das Verbindungselement auch als vergleichsweise formsteifes Einlege- oder Einsteckteil, beispielsweise in Form eines clipsartigen Bauteils mit federnden Spreizzungen oder dergleichen, ausgeführt sein, solange die zum Ausgleich der Fertigungstoleranzen und Dämpfung der mechanischen Schwingungen notwendigen elastischen Eigenschaften sichergestellt sind.

Nach einem bevorzugten Ausführungsbeispiel weist das Verbindungselement mindestens einen in die Ausnehmung einbringbaren Verbindungsbereich und einen einstückig an den Verbindungsbereich angeformten oder daran lösbar oder unlösbar angeordneten aus der Ausnehmung hervorragenden die Ausnehmung im wesentlichen abdeckenden Abdeckbereich auf. Diese Möglichkeit der Trennfugenabdeckung ist neben einer ästhetisch befriedigenden Gestaltung und der Erzielung einer Abdichtung gegenüber Schmutz und Wasser insbesondere zur Vermeidung von Windgeräuschen während der Fahrt von Vorteil.

Der Abdeckbereich und der Verbindungsbereich können aus dem gleichen Material, beispielsweise aus Gummi, oder aber aus unterschiedlichem Material bestehen. Dadurch kann beispielsweise bei einem Elastomerverbindungsbereich ein Abdeckbereich aus einem Duroplast oder aus einem beispielsweise verchromten Material in Form einer Zierleiste zur Erzielung einer speziellen ästhetischen Wirkung Verwendung finden. Die Herstellung kann beispielsweise in Form eines Mehr-Komponenten-Spritzverfahrens, einer Ko-Extrusion oder dergleichen erfolgen.

Im folgenden ist die Erfindung anhand lediglich Ausführungsbeispiele darstellender Zeichnungen näher erläutert. Es zeigt
- **Fig. 1**: in schematischer perspektivischer nicht maßstäblicher Darstellung ein erstes Ausführungsbeispiel einer erfindungsgemäßen Klemm- oder Steckverbindung zweier Bauteile;
- **Fig. 2**: einen Schnitt entlang der Schnittlinie I - I gemäß **Fig. 1** in abgebrochener vergrößerter Darstellung;
- **Fig. 3**: in schematischer Darstellung in seitlicher Ansicht sechs Varianten einer erfindungsgemäßen Klemmoder Steckverbindung;
- **Fig. 4**: in perspektivischer schematischer Darstellung das zweiteilige Gehäuse eines Fahrzeugspiegels mit schlaufenförmig geschlossenem Verbindungselement vor der Montage;
- **Fig. 5**: in abgebrochener Schnittdarstellung eine Schnitt entlang der Schnittlinie II - II in **Fig. 4;** und
- **Fig. 6**: in einer der **Fig. 5** entsprechenden Schnittdarstellung das Gehäuse nach den **Fig. 4** und **5** im montierten Zustand.

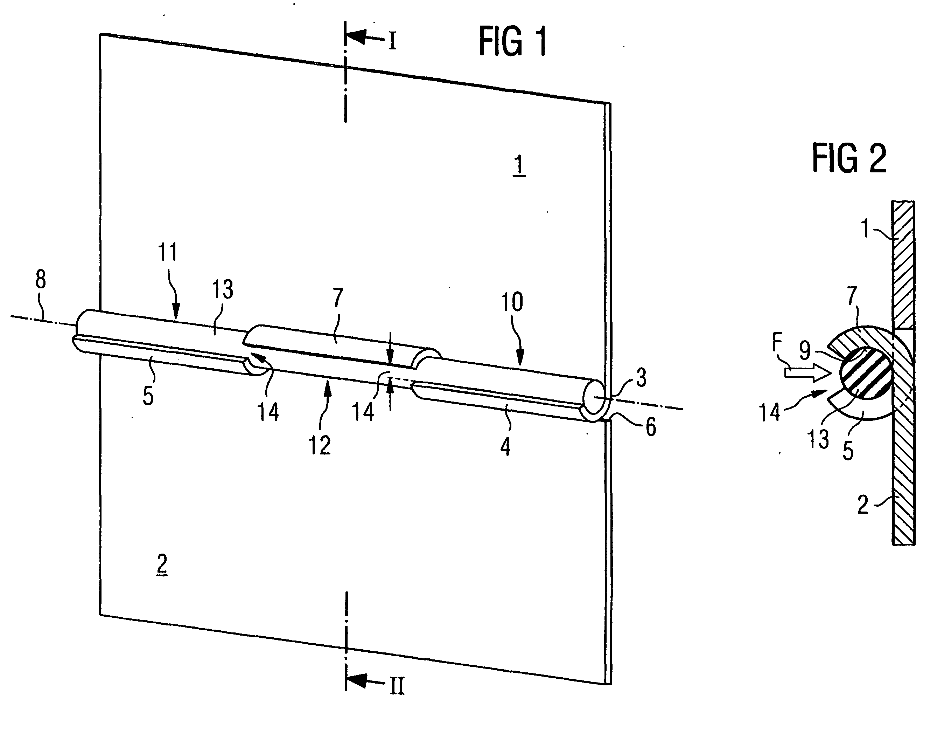

Die in **Fig. 1** dargestellte erfindungsgemäße Klemm- oder Steckverbindung dient zur Verbindung der beiden plattenförmigen Bauteile 1 und 2. Das plattenförmige Bauteil 1 weist dabei im Bereich seiner zum zweiten Bauteil 2 weisenden Kante 3 zwei im wesentlichen rinnenförmige aus der Kante 3 hervorragende Profilansätze 4 und 5 auf, die, bezogen auf die Darstellung nach Fig. 1, nach oben offen sind. In ähnlicher Weise weist das Bauteil 2 im Bereich seiner zum ersten Bauteil 1 weisenden Kante 6 einen aus der Kante 6 hervorragenden ebenfalls rinnenförmigen Profilansatz 7 auf, der nach unten hin offen ist.

Im in **Fig. 1** dargestellten montierten Zustand der beiden Bauteile 1, 2 sind die Profilansätze 4 und 5 des ersten Bauteils 1 und der Profilansatz 7 des zweiten Bauteils in Richtung der Achse 8 alternierend angeordnet, das heißt, jeder Profilansatz eines Bauteils ist mindestens einem Profilansatz des anderen Bauteils unmittelbar benachbart angeordnet. Dabei wird durch die Profilansätze 4, 5 bzw. 7 eine durchgehende Ausnehmung 9 **(Fig. 2)** gebildet. Diese Ausnehmung 9 weist eine im wesentlichen "rohrförmige" Gestalt mit radial wechselseitig offenen Bereichen 10, 11 und 12 auf.

In der Ausnehmung 9 ist ein strang- oder stangenförmiges Verbindungselement 13 aus Gummi die Ausnehmung 9 im wesentlichen vollständig ausfüllend angeordnet und liegt mit seiner Außenfläche zumindest bereichsweise an der Innenfläche der rinnenförmigen Profilansätze 4, 5 und 7 an. Dadurch werden die benachbarten Profilansätze 7 und 4 bzw. 7 und 5 und damit die beiden Bauteile 1 und 2 gegeneinander mechanisch verriegelt. Aufgrund des Gummmimaterials des Verbindungselementes 13 erfolgt die Kopplung elastisch, wodurch zum einen Fertigungstoleranzen ausgleichbar und zum anderen die beiden Bauteile 1 und 2 schwingungstechnisch voneinander zumindest weitgehend entkoppelbar sind.

Wie insbesondere der vergrößerten Darstellung nach **Fig. 2** zu entnehmen ist, ist aufgrund der Öffnungswinkel der Profilansätze 4, 5 und 7 ein im wesentlichen entlang der Trennfuge verlaufender axial durchgehender nach radial außen offener Spalt 14 gebildet. Durch diesen Spalt 14 ist das gummielastische Verbindungselement 13 von radial außen in Pfeilrichtung F in die Ausnehmung 9 unter elastischer Verpressung einbringbar und gegebenenfalls wieder entnehmbar.

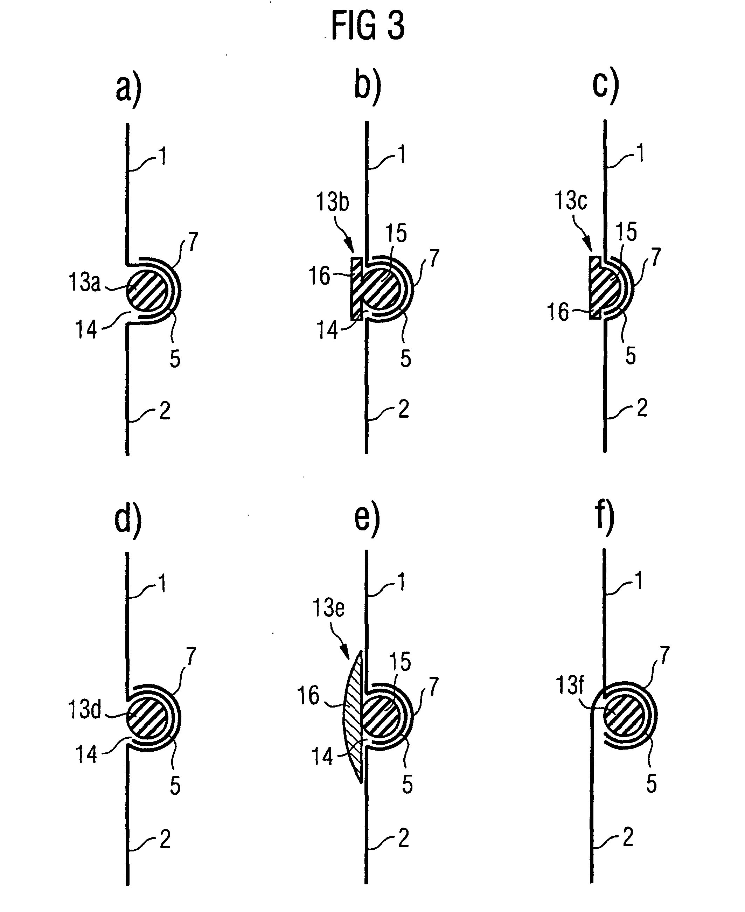

In **Fig. 3** sind sechs mögliche Varianten einer erfindungsgemäßen Klemmoder Steckverbindung zur lösbaren Verbindung zweier Bauteile 1 und 2 lediglich beispielhaft schematisch dargestellt. Einander entsprechende Elemente sind jeweils mit den gleichen Bezugsziffern versehen.

In der unter **a)** dargestellten Variante sind die Profilansätze 5 und 7 im Querschnitt im wesentlichen halbkreisförmig ausgebildet und öffnen sich gleichsinnig unter Bildung eines maximalen Spalts 14 ohne hintersohnittartige Bereiche. Das elastische Verbindungselement 13a weist im Querschnitt eine kreisförmige Gestalt auf und ist mit seinem gesamten Querschnitt in der durch die Profilansätze 5 und 7 gebildeten Ausnehmung angeordnet. Diese Gestaltung ist vor allem dann vorteilhaft und ausreichend, wenn zwei Bauteile 1 und 2 mit im wesentlichen beispielsweise ringförmig geschlossenem Querschnitt mit einem schlaufenartig geschlossen umlaufenden Verbindungselement verbunden werden sollen.

In der unter **b)** dargestellten Variante sind die Profilansätze 5 und 7 derart ausgebildet, daß ein im Querschnitt beidseitig hinterschnittener Spalt 14 gebildet wird. Das Verbindungselement 13 b weist im Querschnitt ein im wesentlichen pilzförmiges Profil mit einem Verbindungsbereich 15 und einem Abdeckbereich 16 auf. Der Verbindungsbereich 15 und der Spalt 14 sind dabei so form- und funktionskomplementär ausgebildet, daß der Verbindungsbereich 15 unter elastischer Verpressung von radial außen durch den Spalt 14 in die Ausnehmung eindrückbar und dort nach Art einer Clips-Verbindung einrastbar ist. Der Abdeckbereich 16 ist einstückig so am Verbindungsbereich 15 angeformt, daß im montierten Zustand der Spalt 14 vollständig abgedeckt ist.

Die Variante nach **c)** entspricht im wesentlichen der Variante nach **b)**, jedoch wird durch die Profilansätze 5 und 7 kein hinterschnittener, sondern ein offener Spalt wie unter Variante **a)** gebildet. Bei dieser Variante muß eine zusätzliche Fixierung des Verbindungselements 13c in der Ausnehmung erfolgen.

Variante **d)** entspricht im wesentlichen der Variante **a),** wobei jedoch die durch die Profilansätze 5 und 7 gebildete Ausnehmung wiederum einen hinterschnittenen Spalt 14 bildet, in den das im Querschnitt kreisförmige Verbindungselement 13d clips-artig einrastend eindrückbar ist.

In der Variante **e)** ist gegenüber der Variante **b)** das im Querschnitt pilzförmige Verbindungselement 13e mit einem den Spalt 14 abdeckenden Abdeckbereich 16 versehen, der aus einem anderen Material besteht als der Verbindungsbereich 15. Dies kann beispielsweise eine Chromleiste sein, die durch Kleben oder Vulkanisieren mit dem Verbindunsgbereich 15 aus Gummi verbunden ist. Dadurch kann das Verbindungselement 13e als designbildendes Element Verwendung finden.

Bei der Variante **f)** sind die Profilansätze 5 und 7 derart geformt und angeordnet, daß sich insgesamt, das heißt über die gesamte axiale Länge der Verbindung, eine nahezu rohrförmig geschlossene Ausnehmung, ergibt. Bei dieser Anordnung muß das Verbindungselement 13f in axialer Richtung in die Ausnehmung eingesteckt oder eingefädelt werden.

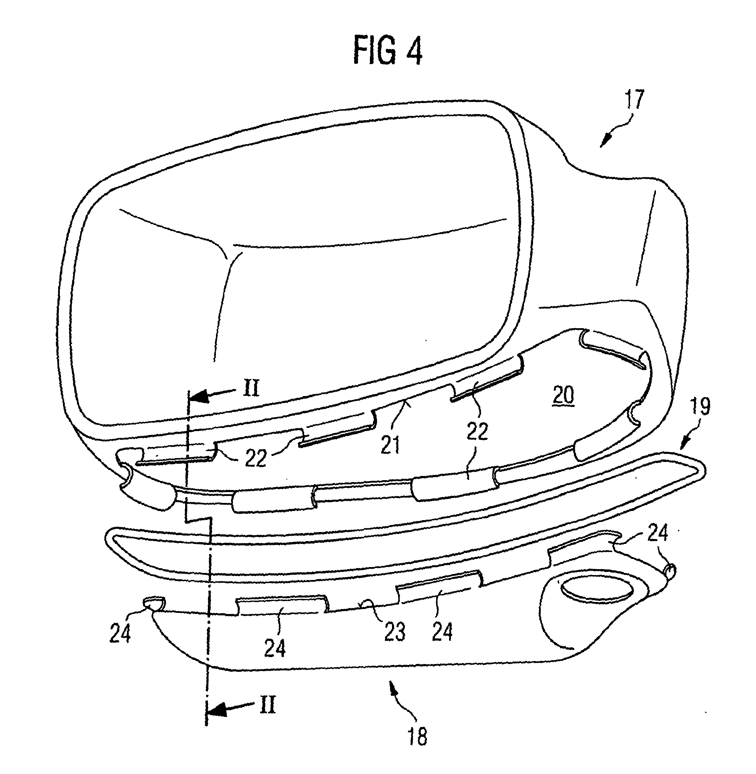

In **Fig. 4** ist in schematischer Explosionsdarstellung ein zweiteiliges Aussenspiegelgehäuse eines Kraftfahrzeugs dargestellt. Das Gehäuse weist ein einen nicht dargestellten Spiegel aufnehmendes als Hohlkörper ausgebildetes Oberteil 17 und ein wannenförmiges Unterteil 18 auf. Das Oberteil 17 ist an seiner zum Unterteil 18 weisenden Seite mit einer Öffnung 20 versehen, die eine geschlossen umlaufende randartige Kante 21 aufweist. An der Kante 21 sind regelmäßig beabstandet bogen- oder rinnenförmig nach radial außen, bezogen auf die Öffnung 20, weisende Profilansätze 22 angeordnet.

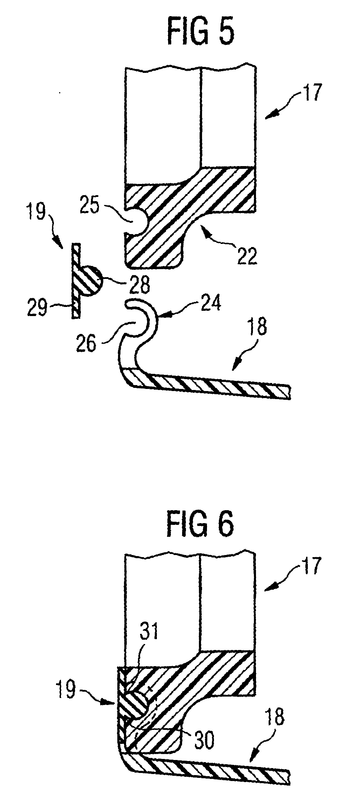

Das Unterteil 18 ist unter Bildung einer in der Darstellung nach **Fig. 4** nicht ersichtlichen Öffnung zum Oberteil 17 hin offen. Die Öffnung weist eine geschlossen umlaufende Kante 23 auf, die mit regelmäßig beabstandeten Profilansätzen 24 versehen ist. die in Anordnung und axialer Länge so den Profilansätzen 22 des Oberteils 17 entsprechen, daß im zusammengefügten Zustand der beiden Gehäuseteile 17 und 18 die Profilansätze 22 und 24 einander alternierend hintergreifen, wobei durch die rinnenartigen Ausnehmungen 25 der Profilansätze 22 des Oberteils 17 und die formkomplementären ebenfalls rinnenartigen Ausnehmungen 26 der Profilansätze 24 des Unterteils 18 insgesamt eine geschlossen umlaufende nach radial außen offene Ausnehmung mit hinterschnittartigen Bereichen 30, 31 gebildet wird (vgl. insbesondere auch **Fig. 5** und **6**). Die Kanten 21 und 23 bilden dabei eine Trennfuge.

Ein elastisches Verbindungselement 19 in Form eines schlaufenartig geschlossen umlaufenden Elastomerrings weist ein im Querschnitt T- oder pilzförmiges Profil mit einem im Querschnitt im wesentlichen kreisförmigen Verbindungsbereich 28 und einem flachbandförmigen Abdeckbereich 29 (vgl. **Fig. 5**) auf. In **Fig. 4** ist aus Gründen einer einfacheren Darstellung lediglich der Verbindungsbereich 28 dargestellt.

Zur Montage der beiden Gehäuseteile 17 und 18 werden diese zunächst in der vorbeschriebenen Weise aufeinandergesetzt, worauf dann das Verbindungselement 19 axial elastisch derart gedehnt wird, daß es über das Gehäuse gezogen und in den Bereich der durch die Profilansätze 22 und 24 gebildeten Ausnehmung gebracht werden kann. Aufgrund seiner elastischen Rückstellkraft schnappt dann das Verbindungselement 19, genauer gesagt der Verbindungsbereich 28 des Verbindungselementes 19, unter geringfügiger radialer Verpressung in die Ausnehmung ein und fixiert die beiden Gehäuseteile 17 und 19 zuverlässig. Der Abdeckbereich 29 gelangt dabei an beiden Gehäuseteilen derart zur Anlage, daß der Spalt oder die Trennfuge zuverlässig abgedeckt und abgedichtet wird.

## Patentansprüche

1. Fahrzeugspiegel, insbesondere Außenspiegel, mit geteiltem Gehäuse, das mindestens ein Unterteil und mindestens ein Oberteil aufweist, wobei Ober- und Unterteil im wesentlichen wannen-, napfoder deckelförmig mit jeweils im wesentlichen geschlossen oder unterbrochen umlaufendem Rand ausgebildet sind,
**dadurch gekennzeichnet,**
**daß** das Ober- (17) und das Unterteil (18) im Bereich ihrer zueinander weisenden die Trennfuge bildenden Kanten (21, 23) jeweils vorspringende Profilansätze (22, 24) aufweisen, die so angeordnet und ausgebildet sind, daß im zusammengefügten Zustand der beiden Gehäuseteile (17, 18) die Profilansätze des Oberteils (17) und des Unterteils (18) unter Bildung einer im wesentlichen nach radial außen offenen Ausnehmung alternierend einander derart hintergreifen, daß ein zumindest in radialer Richtung elastisches Verbindungselement (19) jeweils mindestens zwei benachbarte Profilansätze (22, 24) durchgreifend und diese gegeneinander verriegelnd von radial aussen in die Ausnehmung (27) einbringbar ist.

2. Fahrzeugspiegel nach Anspruch 1,
**dadurch gekennzeichnet,**
**daß** das Verbindungselement (19) ein zum Querschnitt der Ausnehmung im wesentlichen form- und/oder funktionskomplementäres Querschnittsprofil aufweist.

3. Fahrzeugspiegel nach Anspruch 1 oder 2,
**dadurch gekennzeichnet,**
**daß** die durch die Profilansätze (22, 24) der Gehäuseteile (17, 18) gebildete Ausnehmung (27) und das Verbindungselement (19) derart form- und funktionskomplementär ausgebildet sind, daß das Verbindungselement (19) unter elastischer Verformung der Profilansätze (22, 24) und/oder des Verbindungselementes (19) nach Art einer Clips-Verbindung lösbar in die Ausnehmung (27) eindrückbar ist.

4. Fahrzeugspiegel nach einem der Ansprüche 1 bis 3,
**dadurch gekennzeichnet,**
**daß** das Verbindungselement (19) in der Ausnehmung (27) das Gehäuse im Bereich der Trennfuge im wesentlichen vollständig geschlossen umläuft.

5. Fahrzeugspiegel nach einem der Ansprüche 1 bis 4,
**dadurch gekennzeichnet,**
**daß** das Verbindungselement (19) im wesentlichen aus einem Elastomer, insbesondere aus Gummi oder einem gummiähnlichen Material besteht.

6. Fahrzeugspiegel nach Anspruch 4,
**dadurch gekennzeichnet,**
**daß** das Verbindungselement (19) im wesentlichen in Form einer geschlossenen Schlaufe aus einem durch Schrumpfen in der Länge veränderlichen Material besteht.

7. Fahrzeugspiegel nach Anspruch 4,
**dadurch gekennzeichnet,**
**daß** das Verbindungselement (19) im wesentlichen in Form einer geschlossenen Schlaufe Mittel zur Verkürzung der Schlaufenlänge aufweist.

8. Fahrzeugspiegel nach einem der Ansprüche 1 bis 7,
**dadurch gekennzeichnet,**
**daß** das Verbindungselement (19) mindestens einen in die Ausnehmung (27) einbringbaren Verbindungsbereich (28) und einen einstückig an den Verbindungsbereich (28) angeformten oder daran lösbar oder unlösbar angeordneten aus der Ausnehmung (27) hervorragenden die Ausnehmung im wesentlichen abdeckenden Abdeckbereich (29) aufweist.

9. Fahrzeugspiegel nach Anspruch 8,
**dadurch gekennzeichnet,**
**daß** der Abdeckbereich (29) und der Verbindungsbereich (28) aus unterschiedlichem Material bestehen.

10. Fahrzeugspiegel nach einem der Ansprüche 1 bis 8,
**dadurch gekennzeichnet,**
**daß** das Verbindungselement (13) Bestandteil mindestens eines der Gehäuseteile (17, 18) ist, insbesondere an eines Bauteile (17, 18) einstückig angeformt oder an diesem auf sonstige Weise befestigt ist.

## Claims

1. Vehicle mirror, in particular exterior mirror, with a divided housing comprising at least one lower part and at least one upper part, wherein the upper and the lower part are substantially tank-, cup- or lid-shaped and formed with a respective rim circulating in a substantially closed or intermittent fashion,
**characterised in**
**that** the upper (17) and the lower part (18) each comprise projecting shaped lugs (22, 24) in the region of their facing edges (21, 23) forming the parting line, which lugs are disposed and formed such that, when the two housing parts (17, 18) are in the assembled state, the shaped lugs of the upper part (17) and of the lower part (18) engage behind one another in alternating fashion, while forming a recess which is substantially open radially outwards, such that a connecting element (19), which is elastic at least in the radial direction, can be introduced into the recess (27) radially from outside while passing through at least two respective adjacent shaped lugs (22, 24) and locking these against one another.

2. Vehicle mirror according to Claim 1,
**characterised in**
**that** the connecting element (19) has a cross-sectional profile which is substantially complementary to the cross section of the recess in terms of shape and/or function.

3. Vehicle mirror according to Claim 1 or 2,
**characterised in**
**that** the recess (27), formed by the shaped lugs (22, 24) of the housing parts (17, 18), and the connecting element (19) are formed so as to be complementary in terms of shape and function such that the connecting element (19) can be pushed in a disengageable fashion into the recess (27) like a clip connection while the shaped lugs (22, 24) and/or the connecting element (19) are elastically deformed.

4. Vehicle mirror according to any one of Claims 1 to 3,
**characterised in**
**that** the connecting element (19) in the recess (27) extends around the housing in the region of the parting line in a substantially completely closed fashion.

5. Vehicle mirror according to any one of Claims 1 to 4,
**characterised in**
**that** the connecting element (19) consists substantially of an elastomer, in particular of rubber or a rubber-like material.

6. Vehicle mirror according to Claim 4,
**characterised in**
**that** the connecting element (19), substantially in the form of a closed loop, consists of a material whose length can be varied through shrinking.

7. Vehicle mirror according to Claim 4,
**characterised in**
**that** the connecting element (19), substantially in the form of a closed loop, comprises means for shortening the loop length.

8. Vehicle mirror according to any one of Claims 1 to 7,
**characterised in**
**that** the connecting element (19) comprises at least one connecting region (28), which can be introduced into the recess (27), and one cover region (29), which is moulded integrally onto the connecting region (28) or disposed thereon in a disengageable or permanent fashion, protrudes out of the recess (27) and substantially covers the latter.

9. Vehicle mirror according to Claim 8,
**characterised in**
**that** the cover region (29) and the connecting region (28) consist of different materials.

10. Vehicle mirror according to any one of Claims 1 to 8,
**characterised in**
**that** the connecting element (13) is a component at least of one of the housing parts (17, 18), is in particular integrally moulded onto one component (17, 18) or attached to the latter in a different way.

## Revendications

1. Rétroviseur pour véhicule, en particulier rétroviseur extérieur, avec un boîtier en plusieurs parties présentant au moins une partie inférieure et au moins une partie supérieure, la partie supérieure et la partie inférieure étant sensiblement en forme de récipient, de godet ou de couvercle, avec pour chacune un bord de pourtour pratiquement fermé ou interrompu,
**caractérisé en ce que** la partie supérieure (17) et la partie inférieure (18), dans la zone de leurs arêtes (21, 23) tournées l'une vers l'autre, formant le joint de séparation, présentent chacune des appendices profilés (22, 24) en saillie, disposés et configurés de manière que, lorsque les deux parties de boîtier (17, 18) sont à l'état assemblé, les appendices profilés de la partie supérieure (17) et de la partie inférieure (18) s'engagent l'un avec l'autre par l'arrière en alternance, en formant un évidement sensiblement ouvert radialement vers l'extérieur, tel qu'un élément de liaison (19), élastique au moins en direction radiale, traverse chaque fois au moins deux appendices profilés (22, 24) voisins et est susceptible d'être inséré depuis l'extérieur radialement dans l'évidement (27), en verrouillant ceux-ci l'un contre l'autre.

2. Rétroviseur pour véhicule selon la revendication 1, **caractérisé en ce que** l'élément de liaison (19) présente un profil de section transversale sensiblement complémentaire, du point de vue de la forme et/ou de la fonction, vis-à-vis de la section transversale de l'évidement.

3. Rétroviseur pour véhicule selon la revendication 1 ou 2, **caractérisé en ce que** l'évidement (27), formé par les appendices profilés (22, 24) des parties de boîtier (17, 18), et l'élément de liaison (19) sont configurés avec une complémentarité de forme et de fonction, telle que l'élément de liaison (19) est susceptible d'être enfoncé, en s'accompagnant d'une déformation élastique des appendices profilés (22, 24) et/ou de l'élément de liaison (19), dans l'évidement (27) de façon désolidarisable à la façon d'une liaison à enclipsage.

4. Rétroviseur pour véhicule selon l'une quelconque des revendications 1 à 3, **caractérisé en ce que** l'élément de liaison (19) dans l'évidement (27) entoure de façon pratiquement complètement fermée le boîtier dans la zone du joint de séparation.

5. Rétroviseur pour véhicule selon l'une quelconque des revendications 1 à 4, **caractérisé en ce que** l'élément de liaison (19) est essentiellement constitué d'un élastomère, en particulier de caoutchouc ou bien d'un matériau analogue à du caoutchouc.

6. Rétroviseur pour véhicule selon la revendication 4, **caractérisé en ce que** l'élément de liaison (19) est essentiellement constitué d'un matériau ayant la forme d'une boucle fermée et dont la longueur est modifiable par rétraction.

7. Rétroviseur pour véhicule selon la revendication 4, **caractérisé en ce que** l'élément de liaison (19) présente des moyens, réalisés sensiblement sous la forme d'une boucle fermée, pour raccourcir la longueur de cette boucle.

8. Rétroviseur pour véhicule selon l'une quelconque des revendications 1 à 7, **caractérisé en ce que** l'élément de liaison (19) présente au moins une zone de liaison (28), pouvant être introduite dans l'évidement (27), et une zone de recouvrement (29) recouvrant pratiquement l'évidement, formée d'un seul tenant sur la zone de liaison (28) ou bien disposée sur celle-ci de façon désolidarisable ou indésolidarisable et ressortant de l'évidement (27).

9. Rétroviseur pour véhicule selon la revendication 8, **caractérisé en ce que** la zone de recouvrement (29) et la zone de liaison (28) sont en un matériau différent.

10. Rétroviseur pour véhicule selon l'une quelconque des revendications 1 à 8, **caractérisé en ce que** l'élément de liaison (13) fait partie d'au moins l'une des parties de boîtier (17, 18), en particulier est formé d'un seul tenant sur une partie de boîtier (17, 18) ou bien est fixé sur celle-ci d'une autre manière.
